# EUROPÄISCHE PATENTSCHRIFT

(11) **EP 0 746 861 B1**
(45) Veröffentlichungstag und Bekanntmachung des Hinweises auf die Patenterteilung: **11.06.1997**
(21) Anmeldenummer: 95916500.2
(22) Anmeldetag: 04.05.1995
(51) Int. Cl.: H01F 27/32, H02K 3/30, H02K 3/34, H01B 3/50

(54) **MEHRFACHPARALLELLEITER FÜR WICKLUNGEN ELEKTRISCHER MASCHINEN UND GERÄTE**
MULTIPLE PARALLEL CONDUCTOR FOR WINDINGS OF ELECTRIC MACHINES AND DEVICES
CONDUCTEUR PARALLELE MULTIPLE POUR ENROULEMENTS DE MACHINES ET APPAREILS ELECTRIQUES

(30) Priorität: 10.05.1994 AT 976/94
(43) Veröffentlichungstag der Anmeldung: 11.12.1996
(73) Patentinhaber: ASTA Elektrodraht GmbH, A-2755 Oed/Bez. Wiener Neustadt (AT)
(72) Erfinder: PERGER, Paul, AT-2761 MIESENBACH (AT); BARTMANN, Peter, A-2511 Pfaffstätten (AT)
(74) Vertreter: Krause, Peter
(86) Internationale Anmeldenummer: AT9500086
(87) Internationale Veröffentlichungsnummer: WO9530991

(56) Entgegenhaltungen:
- WO-A-94/07251
- DE-A- 1 640 890
- DE-A- 4 130 734
- DE-B- 1 189 599

## Beschreibung

Die Erfindung betrifft einen Mehrfachparallelleiter für Wicklungen elektrischer Maschinen und Geräte,insbesondere Transformatoren, der aus einzelnen lackisolierten Teilleitern zu einem rechteckigem Querschnitt zusammengesetzt ist, bestehend aus mindestens zwei Teilleitern oder einem aus Teilleitern bestehenden Drilleiter, wobei der Mehrfachparallelleiter mit einem großmaschigen Webband umbändert ist.

Bisher wurden zur Herstellung von Mehrfachparallelleitern der obgenannten Art flache Teilleiter mit einem recht eckigen, Querschnitt verwendet, wobei auch Teilleiter mit rundem Querschnitt vorstellbar sind. Diese Mehrfachparallelleiter, insbesondere Drilleiter werden als Wicklungsmaterial im Transformatorenbau eingesetzt. Dabei bestehen diese Mehrfachparallelleiter üblicherweise aus einer un-geraden Anzahl von lackierten Flachdrähten aus Kupfer oder Aluminium, die nach einem speziellen System verseilt, bzw. verröbelt werden. Das gesamte Leiterbündel wird mit einer entsprechenden den Anforderungen mehr oder minder dicken Papierisolierung versehen, wobei diese Papierumhüllung einerseits zum Zusammenhalt des Leiterbündels unerläßlich ist und vor dem Wickeln arbeitsaufwendig wieder entfernt werden kann, oder andererseits bei höheren elektrischen Anforderungen als zusätzliche Isolierung entsprechend der geforderten Spannungsfestigkeit dient und mitgewickelt wird.
Ebenso werden auch derartige Mehrfachparallelleiter als verdrillte Wicklungsstäbe, sogenannte Röbelstäbe, im Elektromaschinenbau zur Verminderung bzw. Unterdrückung der Wirbelstromverluste in den Nutstäben, insbesondere bei großen elektrischen Maschinen, verwendet.
Beim Verwickeln von derartigen Mehrfachparallelleitern werden nun zwischen den Windungen Distanzplättchen eingelegt, um einen Ölkanal zur besseren Kühlung der Wicklung zu bilden. Die den Mehrfachparallelleiter umhüllende Papierisolation hat jedoch die Eigenschaft, daß sie sich von der Flachseite des Mehrfachleiters abheben kann und aufgebauscht in den Kühlkanalquerschnitt hineinragt und damit den Kühlkanalquerschnitt reduziert. Ferner treten auch im Bereich vor und nach den Distanzplättchen Kühlmittelstaus durch Taschenbildung auf. Es ist daher eine schlechtere Kühlmittelzirkulation gegeben. sodaß ein größerer Abstand zwischen den Windungen vorgesehen werden muß. Weiters muß beim Wickelvorgang der Spulen auf die geringe Reiß- und Scherfestigkeit bei Papierisolation bzw. auf Beschädigungen derselben, Rücksicht genommen werden.

Ferner ist durch einen möglichen Abrieb der Papierisolation eine Verschmutzung des Kühlmittels gegeben, der durch das Kühlmittelfilter wieder entfernt werden muß und dieses verstopfen kann.
Des weiteren kann es im Falle von Ausfransen der Papierisolation zu
Glimmentladungen zwischen den einzelnen Windungen der Wicklung kommen, was die Leistung vermindert und die Lebensdauer der Wicklung beeinträchtigt.

Darüber hinaus ist aus der WO 94/07251 ein Drilleiter der eingangs beschriebenen Art bekannt, der mindestens an einer Flachseite aus Isolierstoff bestehende Distanzstücke aufweist. Diese Distanzstücke werden zur Befestigung am Drilleiter mit einer Umhüllung in Form einer großmaschigen, mit teilvernetzten Epoxidharz vorimprägnierten Glasgewebebandage versehen.

Weiters ist in der DE-B 1 189 599 ein Isolierband für elektrische Zwecke betrieben. Dieses Band besteht aus einem Gewebe aus dichtgepackten Glasseidenkettfäden und in weiten Abständen dazwischengeschlossenen Schußfäden. Dieses Isolierband dient zum Umwickeln von rotierenden elektrischen Bauteilen.

Aufgabe der Erfindung ist es, einen Mehrfachparallelleiter der eingangs zitierten Art zu schaffen, der einerseits die oben genannten Nachteile vermeidet und andererseits gute elektrische Eigenschaften aufweist und wirtschaftlich maschinell verarbeitet werden kann.

Der erfindungsgemäße Mehrfachparallelleiter ist **dadurch gekennzeichnet, daß** die Maschenweite des Webbandes mindestestens 2mm im Quadrat aufweist und das Webband eine Webkante aufweist, die die Festigkeit des Bandes gegen Einreißen wesentlich erhöht, wobei die Schuß- und/oder Kettfäden aus Polyester oder einem aus Glasseide und Polyester bestehendem Mischgarn hergestellt sind.
Mit der Erfindung ist es erstmals möglich. einen Mehrfachparallelleiter zu schaffen, der die Nachteile bei der Kühlung zwischen den einzelnen Windungen und des Abriebes im Falle der Verwendung einer Papierisolation durch Verwendung eines Webbandes in der oben erwähnten Art vermeidet.
Ein weiterer Vorteil ist dadurch gegeben, daß bei der Verwendung eines Webbandes mit der erfindungsgemaßen Webkante die Festigkeit des Bandes gegen Einreißen bei der Herstellung der Wicklung aus Mehrfachparallelleiter wesentlich erhöht wird, wodurch dieses Webband zur maschinellen Umbänderung bestens geeignet ist. Weiters kann bei Verwendung des Webbandes gemäß der Erfindung, bedingt durch die hohe Reißfestigkeit desselben, bei der Wicklungsherstellung die Wickelzeit wesentlich verkürzt werden.

Nach einem weiteren Merkmal der Erfindung wird zur Umbänderung des Mehrfachparallelleiters das Webband mit einem teilvernetzten Epoxidharz vorimprägniert.

Der Vorteil dabei ist, daß nach Aushärtung des Epoxidharzes eine noch höhere Festigkeit des Mehrfachparallelleiters erzielt wird.
Dadurch, daß sich das Webband, im Gegensatz zur Papierisolation, nach Aushärtung des Epoxidharzes nicht mehr von der Flachseite des Mehrfachparallelleiters löst und aufbauscht, kann der Kühlquerschnitt zwischen den Windungen kleiner gewählt werden, wodurch ein günstigerer Wicklungsfüllfaktor erreicht wird und die Bauhöhe der elektrischen Maschinen und Geräte, vorzugsweise Transformatoren, reduziert wird.

Ein weiterer Vorteil des erfindungsgemäßen Mehrfachparallelleiters besteht darin, daß sich das Webband beim Pressen der Wicklung in die Distanzstücke preßt und es daher keine Längserstreckung aufgrund der Isolationsdicke gibt.

Ein weiterer Vorteil bei Ausführung des Mehrfachparallelleiters mit Webband mit Epoxidharztränkung besteht in der erhöhten Kurzschlußfestigkeit der Wicklung.

Generell muß noch bemerkt werden, daß eine Umbänderung des Mehrfachparallelleiters gemäß der vorliegenden Erfindung die Eigenschaft aufweist, Kühlmittel-, bzw. Trafoöl- und Hydrolysebeständig zu sein.

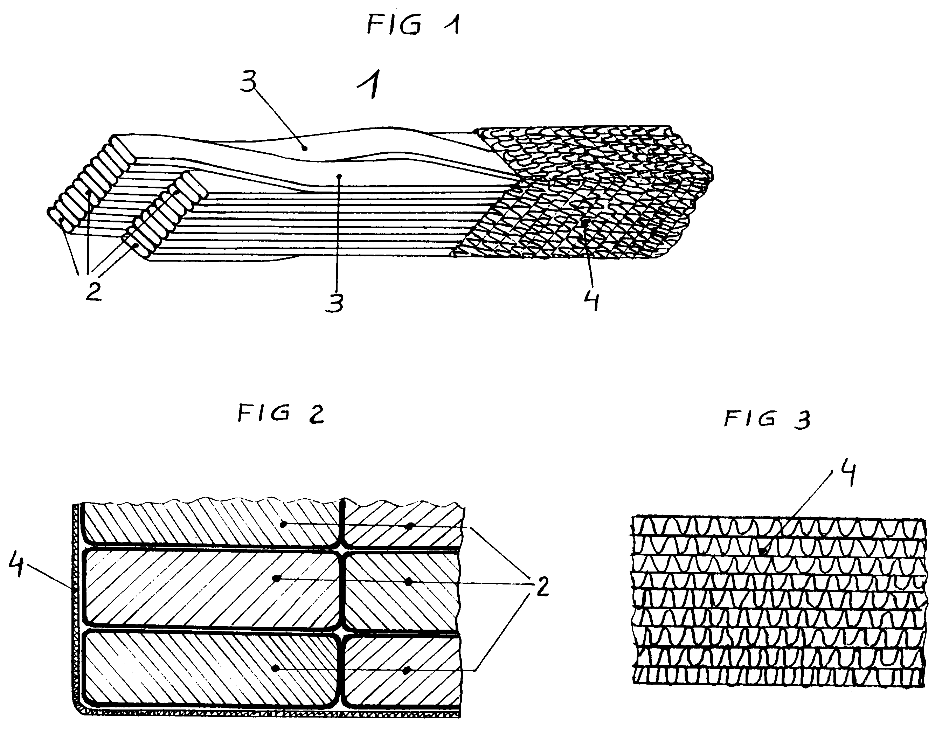

Gemäß der Fig. 1 ist ein Mehrfachparallelleiter, z.B. als Drilleiter 1 dargestellt, wobei bekannterweise bis zu 80 einzelne lackisolierte Teilleiter 2 übereinander angeordnet werden können, die beim maschinellen Verseilen zum Drilleiter jeweils aus zwei Einzelleiterstapel 3 von der obersten in die unterste Lage wechseln, wobei vorzugsweise die Teilleiter 2 um jeweils eine halbe Schrittlänge versetzt werden. Diese Verformung wird Kröpfung genannt.

Um das Zusammenhalten des Teilleiterbündels z.B. zu einem Drillleiter 1 zu gewährleisten, ist eine Umbänderung durch ein Webband 4, bestehend aus Schußfäden und Kettfäden mit einer Maschenweite von mindestens 2 mm im Quadrat, vorgesehen.

Fig. 2 zeigt einen Querschnitt z.B. des Drilleiters 1, der mit dem besagten Webband 4 umbändert ist, welches mit teilvernetztem Epoxidharz getränkt ist.

Fig. 3 zeigt das Webband mit einer Maschenweite von mind 2 mm im Quadrat, einzeln herausgezeichnet.

## Patentansprüche

1. Mehrfachparallelleiter für Wicklungen elektrischer Maschinen und Geräte, insbesondere Transformatoren, der aus einzelnen lackisolierten Teilleitern zu einem rechteckigem Querschnitt zusammengesetzt ist, bestehend aus mindestens zwei Teilleitern (2) oder einem aus Teilleitern (2) bestehenden Drilleiter (1), wobei der Mehrfachparallelleiter mit einem großmaschigen Webband (4) umbändert ist, **dadurch gekennzeichnet,** die Maschenweite des Webbandes (4) mindestens 2 mm im Quadrat aufweist und das Webband (4) eine Webkante aufweist, die die Festigkeit des Bandes (4) gegen Einreißen wesentlich erhöht, wobei die Schuß- und/oder Kettfäden aus Polyester oder einem aus Glasseide und Polyester bestehendem Mischgarn hergestellt sind.

2. Mehrfachparallelleiter nach Anspruch 1, dadurch gekennzeichnet, daß das Webband (4) mit einem teilvernetzten Epoxidharz vorimprägniert ist.

## Claims

1. Multiple parallel conductor for windings for use in electrical machinery or appliances, particularly transformers, which is assembled from individual, enamel insulated subconductors to form a rectangular-section bundle comprising of a minimum of two subconductors (2) or a continuously transposed conductor (1) made up of several subconductors (2), said multiple parallel conductor being wrapped with wide-meshed woven ribbon (4) whose threads are spaced at least 2 mm apart both lengthwise and crosswise, said woven ribbon (4) being provided with a selvedge which substantially increases the resistance of the woven ribbon (4) against cracking, the warp and weft threads being made of polyester or of a mixed glass silk/polyester yarn.

2. Multiple parallel conductor according to Claim 1, whose woven ribbon (4) is preimpregnated with partially reticulated epoxy resin.

## Revendications

1. Conducteur multiple en parallèle pour bobines de machines et appareils électriques, notamment de transformateurs, constitué de sous-conducteurs individuels isolés par un vernis qui sont rassemblés de facon à former une section rectangulaire, comportant au moins deux sous-conducteurs (2) ou un conducteur à transposition continue (1) constitué de plusieurs sous-conducteurs (2), le dit conducteur multiple en parallèle étant enveloppé d'une bande tissée (4) à grandes mailles, caractérisée en ce que la largeur de mailles de la bande tissée (4) est au moins de 2 mm au carré, la bande tissée (4) comportant une lisière, qui augmente de facon substantielle la résistance de la band tissée (4) au déchirement, les fils de trames et de chaîne étant constitués de polyester ou d'un fil mélangé soie de verre et polyester.

2. Conducteur multiple en parallèle selon la revendication 1, caractérisé en ce que la bande tissée (4) est préimprégnée par une résine epoxy partiellement réticulée.
